Europäisches Patentamt

European Patent Office

Office européen des brevets

(19)

(11) Publication number: **0 126 508 B2**

## (12) NEW EUROPEAN PATENT SPECIFICATION

(45) Date of publication of the new patent specification : **20.03.91 Bulletin 91/12**

(51) Int. Cl.⁵ : **B23K 31/00, B23K 9/02**

(21) Application number : **84200661.1**

(22) Date of filing : **08.05.84**

(54) **Method of seam welding a metal tube formed from a folded strip.**

(30) Priority : **13.05.83 IT 2109583**

(43) Date of publication of application : **28.11.84 Bulletin 84/48**

(45) Publication of the grant of the patent : **11.11.87 Bulletin 87/46**

(45) Mention of the opposition decision : **20.03.91 Bulletin 91/12**

(84) Designated Contracting States : **AT BE CH DE FR GB LI LU NL SE**

(56) References cited : **AT-B- 277 719** **DE-A- 1 032 807**

(56) References cited : **DE-A- 1 084 851** **DE-A- 1 118 728** **DE-A- 1 957 834** **US-A- 3 751 623** **US-A- 4 143 801**

(73) Proprietor : **CISE- Centro Informazioni Studi Esperienze S.p.A.** **Via Carducci, 14** **I-20123 Milano (IT)**

(72) Inventor : **Parmeggiani, Aldo** **Via Amadeo 46** **I-20133 Milano (IT)**

(74) Representative : **Martegani, Franco et al** **Ing. Barzanò & Zanardo Milano S.p.A. Via Borgonuovo, 10** **I-20121 Milano (IT)**

EP 0 126 508 B2

## Description

This invention relates to a method of seam welding a metal tube formed from a folded strip. The manufacturing process of welded tubes obtained by shaping a strip does not involve any special problems as to stop and restart of the productive run if the thickness of the workpieces exceeds 0.8 mm to 0.9 mm as an average. In addition, the lengths usually required in the trade from such installations do not exceed, as a rule, ten metres. The installations for the production of thinwalled tubes, for example for making hypodermic needles, are capable of continuously producing the article with the limitations inherent in the welding electrodes or, anyway, in the correct operation of the welding torch.

With the TIG process, such limitation is due to the evaporation of thorium as alloyed in the electrode, the formation of the melted drop and the resultant stop of the welding bath. Usually, this occurs after 2 or 3 hours of continuous operation.

With the plasma welding process, the limitation is to be attributed, instead, to the formation of carbon deposits (between the electrode and the clamps) which actually impair the processing continuity. This usually takes places after 6-8 hours of continuous operation (a working shift).

In the installations mentioned above, the stoppage of the welding run together with the impossibility of restarting same involves the acceptance of the as-produced length and the consequential start of another production cycle.

It has been proposed (AT-BB-277 719) a method of seam welding a metal tube wherein, during a restarting stage, an auxiliary electrode is interposed between the welding electrode and the tube in order to avoid weld faults.

This method, however, is not practical when thin tubes are to be welded. In fact, as known, the space between the welding electrode and the tube must be substantially equal to the thickness of the tube ; it would be very difficult to interpose an auxiliary electrode in such a small space.

An objective of the present invention is to provide a method of seam welding a metal formed from a folded strip, which makes it possible to produce thin-walled tubes having high length. Having this objective in view, according to the present invention, it has been envisaged to provide a method of seam welding a metal tube formed from a folded strip through welding means, the method comprising the step of moving, during a steady state stage, the tube with respect to the welding means to form a continuous longitudinal welded seam on the tube, the step of stopping, during a stop stage, the tube, and the step of moving again, during a restart stage, the tube with respect to the welding means, shifting the welding means from an inoperative position along the previously formed welded seam to an operative position upon the welded seam end, to continue the welded seam, characterized in that during said stop stage the welding means are shifted along the welded seam from said operative position to said inoperative position overwelding the previously welded seam and their welding power is gradually decreased from the steady state value to a zero value, and during said restart stage the welding means are operated starting from said inoperative position, overwelding the previously welded seam, and their welding power is gradually increased from the zero value to the steady stage value, the welding means being shifted together with means which shape and cool the tube.

The structural and functional features and the advantages of the method according to the invention, will be more clearly understood from the ensuing nonlimiting description, aided by the accompanying drawings, wherein :

Figure 1 is a diagrammatical perspective view of an apparatus used for performing a method according to the invention.

Figures 2 and 3 are perspective views of a single detail of the welding area of said apparatus in different working stages, and

Figure 4 is a diagram of the several working stages of the aforesaid method according to the invention.

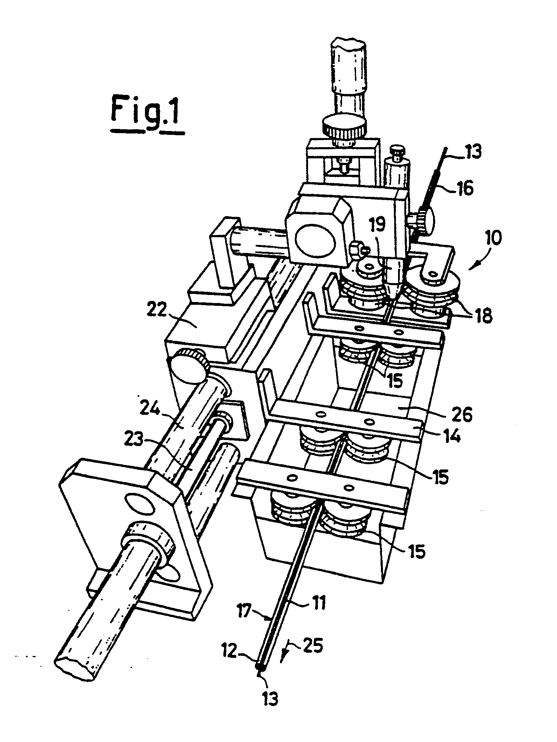

Figure 1 shows an automatic machine, 10, for welding a longitudinal seam 11 in a process for producing thin-walled tubes 12 as obtained from a strip 16, and more particularly adapted to contain, for example, electric wire 13.

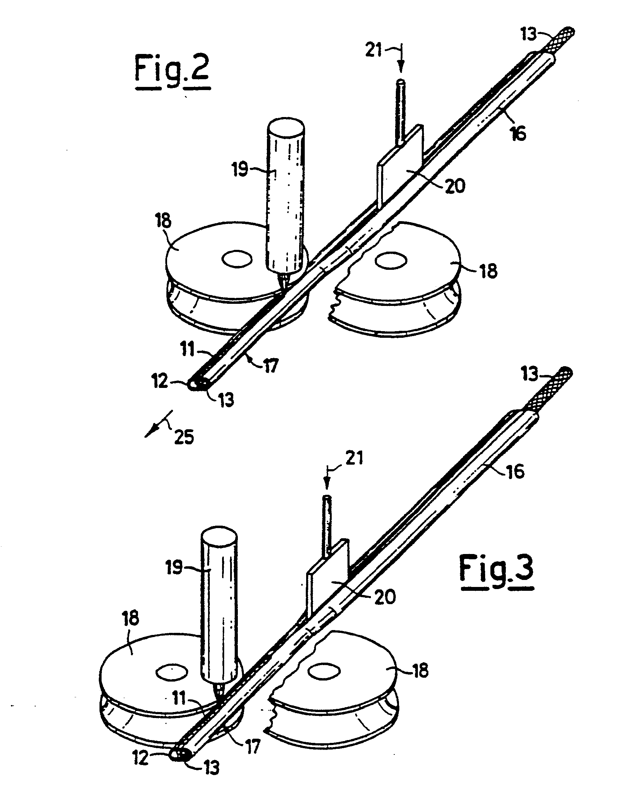

A frame 14, rigidly connected to a movable slide 22, bears a set of couples of rollers 15, of the pulley type, for holding the cable 17, so shaped and welded, within a cooling tub 26. A couple of shaping rollers 18, at the inlet end of the machine 10, completes the shaping of the strip 16 prior to carrying out the longitudinal seam 11, that which is effected by a specially provided member 19, to be selected consistently with the process used. Upstream of the couple of the shaping rollers 18 and the welding member 19, a blade 20 is provided, to guide and to position the electric wire 13 in the interior of the folded strip 16, said blade 20 being equipped with feeding means 21 which are adapted to introduce a protective gas (such as argon) into the interior of the shaped tube (Figures 2, 3). The welding member 19, the blade 20, the couples of rollers 15 and 18 and the cooling tub 26 are secured to the slide 22, which is equipped with driving means 23 which drive the slide on guideways 24 along a direction which is parallel to that of the tube 17, the forward motion being that of the arrow 25 and the backward motion taking place in the reverse direction.

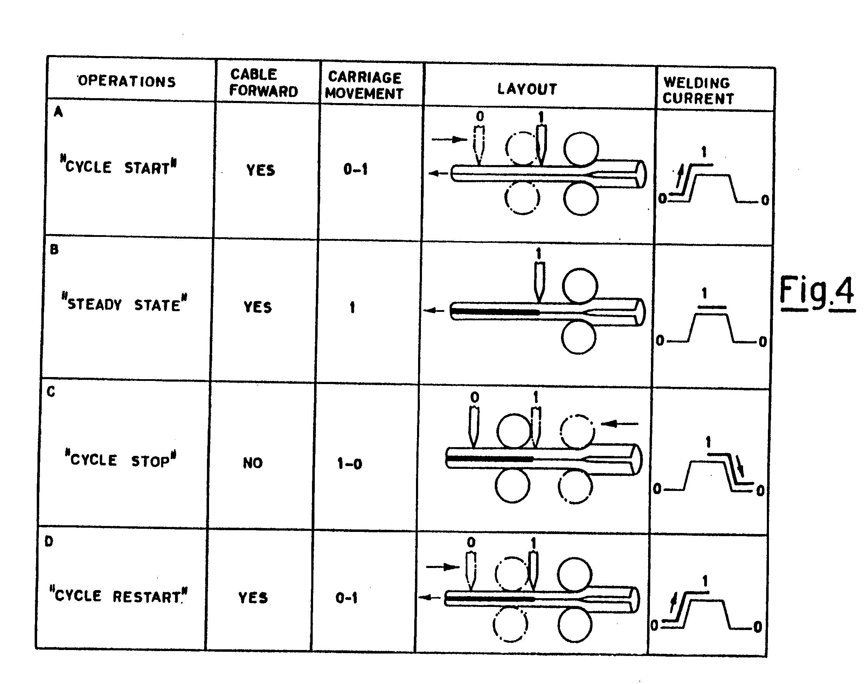

The operation of an apparatus so conceived is diagrammatically set forth in the scheme of Figure 4, namely :

The rolled section, as obtained from the strip 16 and enclosing in its interior the wire 13, is brought into registry with the couple of shaping rollers 18.

In said position, the blade 20 is slipped between the strip edges, which are still spaced apart, and acts so as to shift by a few millimetres the wire 13 away of the wall of the strip 16 to be welded, so as not to damage the wire, protective gas being meanwhile introduced as fed by the means 21.

Once the folded strip 16 and the wire 13 are enclosed therein between the shaping rollers 18, the welding member 19 is started.

According to a programme which is a function of the material to be processed, the welding current is raised up to the steady state value (as symbolized by 0 to 1) and the slide 22, driven by the driving means 23, sets the means 19 into the position where the welding operation begins. During this stage, called the "CYCLE START", the cable 17 so sheathed is fed forward along the direction of the arrow 25 as propelled by the shaping rollers of a shaping machine (not shown), while the welding means 19 are fed backwards and moved in a direction against that of the arrow 25. As the welding current has attained its maximum preset ampere value (1), the machine 10 is in its "steady" state, the cable 17 is being continually shaped and the carriage 22 holds the welding means in its operative position (Figure 2). Past the welding means 19, the cable 17 is immersed in the tub 26, an entity with the carriage 22, and is submerged for at least one half of its thickness so as to be cooled.

It is now necessary to act so as to stop welding, such as for adjustments, control, or a stoppage due to the end of a workshop shift or for any other reason whatsoever

To obtain this, the cable 17 is stopped, the carriage 22, which carries the blade 20, the welding means 19, the couples of rollers 15 and 18 and the cooling tub 26, is carried from the area 1 to 0 and the already welded seam 11 is travelled over again, while, simultaneously, the welding current ampere is gradually decreased from the value 1 to the value 0 (Figure 3).

The entire stage as now described is called "CYCLE STOP" and makes it possible to effect a stoppage in the production of the cable 17 without piercing the wall of the tube 12 or jeopardizing the integrity of the wire 13.

During a "CYCLE RESTART" stage, the operations performed during the "CYCLE START" tage are virtually repeated as such, that is, the carriage 22 brings the welding means 19, the roller couples 15 and 18 and the cooling tub 26 from the position 0 to the position 1 while the welding current ampere is gradually raised from the value 0 to the steady state value, as indicated by the reference numeral 1 herein.

During the latter stage, however, the welding means 19 and the couples of shaping rollers 18 travel over an already welded section once again, whereby the longitudinal welding seam 11 is overcast and its continuity and integrity are thus warranted while the internally enclosed wire 13 remains unaffected

It is apparent that such a welding process and machine can be used with advantage also in those cases in which the tube 12 is to contain in its interior, once it has been welded, optical fibres, wire bundles or other particular articles, so as to obtain cables which are outstandingly resistant, for example, to heat and corrosion.

A cable 17 so constructed is then subjected, as a rule, to extrusion, so as to immobilize the wire or other article therein and, if necessary, also to correct the roundness of the tube. The longitudinal welding operation can be effected both as a butt-welding or with a partial edge overlapping, or according to any other suitable technological operations.

## Claims

1. A method of seam welding a metal tube (12) formed from a folded strip (16) through welding means (19), the method comprising the step of moving, during a steady state stage, the tube (12) with respect to the welding means (19) to form a continuous longitudinally welded seam (11) on the tube (12), the step of stopping, during a stop stage, the tube (12), and the step of moving again, during a restart stage, the tube (12) with respect to the welding means (19), shifting the welding means (19) from an inoperative position along the previously formed welded seam (11) to an oper- ative position upon the welded seam end, to continue the welded seam (11), characterized in that during said stop stage (Fig. 4 ; C) the welding means (19) are shifted along the welded seam (11) from said operative position to said inoperative position overwelding the previously welded seam (11) and their welding power is gradually decreased from the steady state value to a zero value, and during said restart stage (Fig. 4 ; D) the welding means (19) are operated starting from said inoperative position, overwelding the previously welded seam (11), and their welding power is gradually increased from the zero value to the steady state value, the welding means being shifted together with means which shape and cool the tube.

## Ansprüche

1. Verfahren zum Nahtschweissen eines aus einem gebogene Streifen (16) geformten Metallrohres (12) mit Hilfe von Schweissmitteln (19), wobei das Verfahren die Schritte umfasst : Bewegen des Rohres (12) waehrend einer andauernden Arbeitsphase in bzug auf die Schweissmittel (19) zur Herstellung einer durchgehenden in Laengsrichtung geschweissten Naht (11) auf dem Rohr (12), Nichtbewegen des Rohres (12) waehrend einer Ruhephase, und Wiederbewegen des Rohres (12) in bezug auf die Schweissmittel (19) waehrend einer Wiederanlaufphase, Verschieben der Schweissmittel (19) aus einer Ruhestellung entlang der vorher gebildeten Schweissnaht (11) in eine Arbeitsstellung am Schweissnahtende zur Fortsetzung der Schweissnaht (11), dadurch gekennzeichnet, dass waehrend der genannten Ruhephase (Fig. 4 ; C) die Schweissmittel (19) entlang der Schweissnaht (11) aus der genannten Arbeitsstellung in die genannte Ruhestellung bewegt werden, wobei die vorher geschweisste Naht ueberschweisst wird, und die Schweisskraft allmaehlich vom Wert der andauernden Arbeitsphase auf einen Nullwert vermindert wird, und das waehrend der genannten Wiederanlaufphase (Fig. 4 ; D) die Schweissmittel (19) von der genannten Ruhestellung aus gehend in Gang gesetzt, wobei die Schweissmittel zusammen mit Mitteln vershoben werden, welche das Rohr formen und kuehlen.

## Revendications

1. Procédé pour réaliser, par des moyens de soudure (19), le joint de soudure d'un tube métallique (12) formé par une bande pliée (16), procédé comprenant la phase de déplacement, pendant une étape d'état stationnaire, du tube (12) par rapport aux moyens de soudure (19) pour former un joint de soudure longitudinal continu (11) sur le tube (12), la phase d'arrêt du tube (12) pendant une étape d'arrêt, et la phase de déplacement à nouveau du tube (12), pendant une étape de redémarrage, par rapport aux moyens de soudure (19) en déplaçant les moyens de soudure (19) depuis une position inactive le long du joint de soudure réalisé précédemment (11) jusqu'à une position active à l'extrémité du joint soudé pour continuer le joint soudé (11) caractérisé en ce que durant la phase dite d'arrêt (Fig. 4 ; C) les moyens de soudure (19) sont déplacés le long du joint soudé (11) à partir de la position dite active jusqu'à une position dite inactive en "sursoudant" le joint précédemment soudé (11) et leur puissance de soudure est progressivement décroissante depuis la valeur d'état stationnaire jusqu'à une valeur zéro, et durant la phase dite de redémarrage (Fig. 4 ; D) les moyens de soudure (19) agissent en partant de la position dite inactive, en "sursoudant" le joint précédemment soudé (11), et leur puissance de soudure est progressivement croissante de la valeur zéro jusqu'à la valeur d'état stationnaire, les moyens de soudure étant déplacés au même temps que les moyens qui conforment et refroidissent le tube.

# Fig.1

Fig.2

Fig.3

6

| OPERATIONS | CABLE FORWARD | CARRIAGE MOVEMENT | LAYOUT | WELDING CURRENT |
|---|---|---|---|---|
| A "CYCLE START" | YES | 0-1 | | |
| B "STEADY STATE" | YES | 1 | | |
| C "CYCLE STOP" | NO | 1-0 | | |
| D "CYCLE RESTART" | YES | 0-1 | | |

<u>**Fig.4**</u>

EP 0 126 508 B2